# EUROPEAN PATENT APPLICATION

(11) **EP 2 075 715 A2**
(43) Date of publication of application: **01.07.2009**
(21) Application number: 08170694.7
(22) Date of filing: 04.12.2008
(51) Int. Cl.: G06F 17/30

(54) **Destination input device and destination input method**

(30) Priority: 20.12.2007 JP 2007329345
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: TBK-Patent

(57) **Abstract**

A destination input device performs an ordinary search and a fuzzy search. The fuzzy search uses a fuzzy dictionary containing related terms that relate to destination data items, plus generic names that are associated with the related terms and that name and are associated with the destination data items. The fuzzy search extracts the related term that perfectly matches characters that are input, selects the generic names based on the related term and selects destination candidates based on the generic names. By extracting the related term, the fuzzy search reduces the volume of search results. The number of results displayed by the fuzzy search is reduced by displaying the selected generic names along with the destination candidates selected by the ordinary search. A search switch button is provided for switching between a results display that lists the generic names first and a results display that lists the destination candidates first.

## Description

### BACKGROUND OF THE INVENTION

### 1. Field of the Invention

The present invention relates to a destination input device and a destination input method for inputting a destination to a navigation device, for example.

### 2. Description of the Related Art

In recent years, the guidance of vehicles by navigation devices has become increasingly common.
A navigation device has a function that searches for a route from a departure point to a destination, a function that detects the vehicle's position using the Global Positioning System (GPS) satellites and a sensor such as a gyroscope or the like, a function displays the vehicle's current position and the route to the destination on map, and the like.
Generally, a destination is input in cases where a navigation device searches for a route, searches for facilities in the vicinity of the current position and confirms information, and the like. In the destination input procedure, destination candidates that correspond to the characters that are input are found within a destination data file, and the destination candidates are displayed. The input is completed when one of the displayed destination candidates is selected.

Various types of proposals are known to have been made for efficiently performing the destination input.
For example, in Japanese Patent Application Publication No. JP-A-2005-265688, a technology is proposed in which a similar terms storage portion 7 that stores mutually similar terms is provided. The technology references the similar terms storage portion and extracts terms that resemble a keyword, then searches a destination information storage portion 12 based on the terms that resemble the keyword.

### SUMMARY OF THE INVENTION

A search function such as this, in which the characters that are input and related characters are selected from the similar terms storage portion or a thesaurus and a search is performed for specified items based on the characters that are input and the related characters, that is, a search function in which a search is performed that allows for imprecision with respect to the characters that are input, is an effective function for a user who does not accurately recall the characters to be input.
However, a search that allows for imprecision will locate facilities other than the facilities that the user is actually seeking, so it becomes necessary to search for the destination among a huge volume of search results.
Furthermore, for a user who does not need the imprecision, a huge list of unnecessary items is produced, making the search results bothersome to read.
Moreover, in a case where the results of an imprecise search are displayed by a separate operation, the operation becomes cumbersome. Thus, despite the usefulness of the search function, it sometimes creates inconvenience for a user who is unaware of its existence and does not know how to operate it.

Accordingly, it is an object of the present invention to select a desired destination efficiently.

According to the first aspect, the second aspect, and the fourth aspect of the present invention, the related term is extracted using the characters that were input as the search key. The generic names that are associated with the related term, as well as the destination data items that were selected by the ordinary search, are displayed in list form as the search results that correspond to the characters that were input. This makes it possible to inhibit an increase in the number of the results displayed for the fuzzy search, such that the desired destination can be selected more efficiently.
According to the third aspect of the present invention, the search switch button is provided, so even when the fuzzy search displays a large number of results, the destination data items that were selected by the ordinary search can be immediately displayed in list form, starting from the top.

### BRIEF DESCRIPTION OF THE DRAWINGS

FIG. 1 is a system configuration diagram of a navigation device in which an embodiment is used;
FIG. 2 is a figure that conceptually shows associations between destination data items and fuzzy data items that are respectively stored in a destination data file and a fuzzy data file;
FIG. 3 is an explanatory figure of a character input screen that is displayed on a display during a destination input process;
FIG. 4 is an explanatory figure of a candidate display screen;
FIG. 5 is an explanatory figure that shows a state of display on the candidate display screen after the two-character string "ma-tsu" has been input on the character input screen and an End button has been touched;
FIG. 6 is an explanatory figure that shows a state of display on the candidate display screen after the three-character string "ma-tsu-ku" has been input on the character input screen and the End button has been touched; and
FIG. 7 is an explanatory figure that shows a screen that is displayed in a case where a search switch button has been touched on the candidate display screen in FIG. 6.

### DETAILED DESCRIPTION OF THE PREFERRED EMBODIMENTS

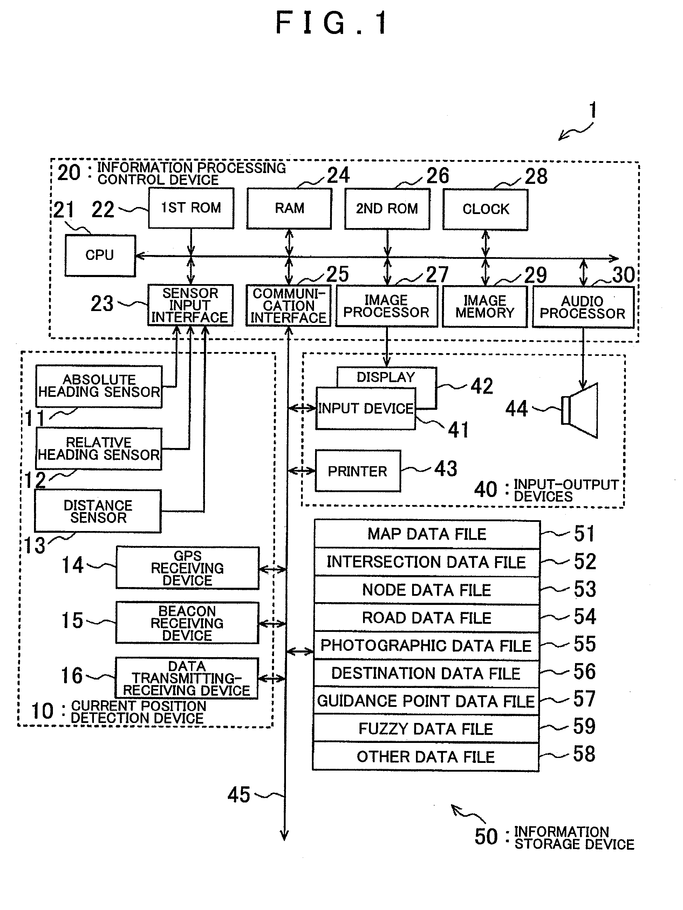

A preferred embodiment of the present invention in a navigation device and a navigation program, in which a destination input device and a destination input program are provided, will be explained below with reference to FIGS. 1 to 7.

### (1) Overview of the embodiment

In the present embodiment, an ordinary search is performed using a phonetically written character string as a search key and extracting destination data (facilities information) from a destination data file. A fuzzy search is also performed using a fuzzy dictionary.
The fuzzy dictionary contains related terms that are related to the destination data, plus generic names that are associated with the related terms and that name a plurality of the destination data items. The various generic names are also associated with the destination data items. In the fuzzy search, the related term that perfectly matches the characters that are input is extracted, and the generic names that are associated with the extracted related term are selected. The destination data items that are associated with the selected generic names are then extracted from the destination data file.
The related terms that are related to the destination data items are configured as synonyms and the like, including abbreviations, nicknames, aliases, and the like, for example, that indicate the destinations. Each of the generic names is a name that shares a common phonetic representation with a portion of each of a plurality of the destination data items.

In the ordinary search, when the destination data items are selected from the destination data file based on the characters that are input, the selection is made sequentially for each individual character that is input.
For example, in a case where the characters "ma", "tsu", and "ku" are input in that order, the input of the character "ma" causes the destination data items whose phonetic representations begin with "ma" to be selected. The destination data items thus selected become the objects of a search that selects the destination data items whose phonetic representations begin with "ma-tsu". The destination data items thus selected then become the objects of a search that selects the destination data items whose phonetic representations begin with "ma-tsu-ku". Thereafter, as each additional character is input, the destination data items are narrowed down further in the same manner. When an End button is selected, the destination data items that remain at that point are displayed as destination candidates.

By contrast, in a case where the destination data items are selected using the fuzzy dictionary, instead of the related terms being extracted for each individual character that is input, only the related term that perfectly matches the entire string of characters that have already been input is extracted. For example, in a case where "ma-tsu-ku" is registered as a related term, no terms are extracted at the point in time when "ma-tsu" is input, but at the point in time when "ma-tsu-ku" is input, the related term that perfectly matches "ma-tsu-ku" is extracted. The generic names "ma-ku-do-na-ru-do", "ma-tsu-ku-su-to-a", and the like that are associated with the related term "ma-tsu-ku" are then selected, and then the destination data items that are associated with the generic names "ma-ku-do-na-ru-do" and the like, such as "ma-ku-do-na-ru-do WW ten" and the like, are selected.

If the character "su" is then input, such that the input string becomes "ma-tsu-ku-su", the related term "ma-tsu-ku" is not a perfect match, so the extraction of the related term "ma-tsu-ku" and the selection of the generic names and the destination data items based on the related term are not performed.
However, in consideration of the possibility that a Return button will be operated to return to the immediately preceding operation, the extracted related term that corresponds to the input "ma-tsu-ku" is stored separately, along with the selected generic names and destination data items.
If the related term "ma-tsu-ku-su" that perfectly matches the input "ma-tsu-ku-su" does not exist, no related term is extracted. If the related term "ma-tsu-ku-su" does exist, the related term "ma-tsu-ku-su" is extracted, the corresponding generic names are selected, and the destination data items that correspond to the generic names are selected.

Thus, taking the related term that perfectly matches the characters that are input and making it the object of the extraction from the fuzzy dictionary makes it possible for the fuzzy search to operate successfully even in a case where only an abbreviation, an alias, or the like is known. It can also prevent a large increase in the number of items that are found by the search.

On the other hand, when the End button is selected after the characters are input, the selected destination data items are displayed as the destination candidates. In this case, the destination data items that are selected by the ordinary search when the related item is extracted from the fuzzy dictionary are displayed as the destination candidates along with the generic names that correspond to the related item.
In the fuzzy dictionary, a plurality of the destination data items are associated with one generic name, so displaying the generic name instead of the destination data items that are selected based on the generic name makes it possible to decrease the number of items (the total number of the displayed items of the destination data the generic names) that are displayed in the list of the destination candidates.

When one of the generic names that is displayed in the candidate list is selected, the destination data items that are associated with the generic name are displayed as the candidate list.
Further, the candidate list displays the generic name at the top (at the upper end), but in light of the fact that there will be cases where the number of the generic names is high, a search switch button 78 is provided as a button that changes the display to a list of the destination candidates that are selected by the ordinary search, starting at the top.

(2) Details of the embodiment
FIG. 1 is a system configuration diagram of the navigation device in which the destination input device and the destination input program according to the present embodiment are used.
The navigation device 1 is installed in a vehicle and, as shown in FIG. 1, includes a current position detection device 10, an information processing control device 20, input-output devices 40, and an information storage device 50.
A configuration of the current position detection device 10 will be explained first. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 is a sensor that detects, for example, whether or not the vehicle has turned at an intersection. It may be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used. In other words, the relative heading sensor 12 may be any unit that can detect an angle that changes in relation to a reference angle (the absolute heading).
A distance sensor 13 may be, for example, a unit that detects and measures a rotation of a wheel or a unit that detects an acceleration and derives its second integral. In other words, the distance sensor 13 may be any unit that can measure a distance that the vehicle moves.

A GPS receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as VICS information, information on traffic congestion, information on the vehicle's current position, parking information, and the like.

A data transmitting-receiving device 16 is a device that utilizes a telephone circuit or radio waves to perform communication and exchange information with other devices outside the vehicle.
For example, the data transmitting-receiving device 16 may be used in a variety of ways, such as for a car telephone, ATIS, VICS, GPS route correction, inter-vehicle communication, and the like, and is capable of inputting and outputting information that relates to the operation of the vehicle.
The information processing control device 20 performs calculations and control based on information that is input from the current position detection device 10 and the input-output devices 40, as well as on information that is stored in the information storage device 50. The information processing control device 20 is also a unit that performs control such that calculation results are output to an output unit such as a display 42, a printer 43, a speaker 44, or the like.

The configuration of the information processing control device 20 is described below.
A central processing unit (CPU) 21 performs overall calculations and control for the entire navigation device 1.
A first ROM 22 stores programs that are related to navigation, specifically navigation programs that are related to a destination input process for the ordinary search and the fuzzy search according to the present embodiment, to current position detection, to route searching, to displayed guidance, and the like.
A sensor input interface 23 is a unit that receives information from the current position detection device 10.

A RAM 24 stores information that a user inputs, such as an input from an input device 41 that is described later, as well as destination information, information on a point that the vehicle passes, and the like. The RAM 24 is also a storage unit for storing the results of calculations that the CPU 21 makes based on the information that is input by the user, route search results, and map information that is read in from the information storage device 50.
Furthermore, in the destination input process according to the present embodiment, the related term that is extracted by the fuzzy search, the generic names that are selected based on the related term, the destination data items that are selected based on the generic names, and the destination data items that are selected based on the ordinary search are stored as destination candidates in the RAM 24.
A communication interface 25 is a unit that inputs and outputs information from the current position detection device 10, particularly information that is acquired from outside the vehicle.

A second ROM 26 stores programs that are related to navigation, specifically a navigation program that is related to voice guidance.
An image processor 27 is a processing unit that takes vector information that is processed by the CPU 21 and processes it into image information.
A clock 28 keeps tim.
An image memory 29 is a unit that stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be a touch panel that is provided on the face of the display 42, a touch switch, a joystick, a key switch, or the like.
A map of the area around the current position, various types of operation screens, and a driving route to the destination are displayed on the display 42.
Also displayed on the display 42 are operation screens, such as a character input screen for inputting the search characters that are used in the destination input process according to the present embodiment, a candidate display screen that displays a list of search candidates (destination candidates), and the like. Touching a position that corresponds to an item or the like that is displayed on an operation screen causes the item in the touched position to be input from the touch panel that is provided on the screen of the display 42.

The information storage device 50 is connected to the information processing control device 20 through a transmission route 45.
The information storage device 50 stores a map data file 51, an intersection data file 52, a node data file 53, a road data file 54, a photographic data file 55, a destination data file 56, a guidance point data file 57, a fuzzy data file 59, and an other data file 58.
The information storage device 50 is generally configured from an optical storage medium such as a DVD-ROM or a CD-ROM, or from a magnetic storage medium such as a hard disk or the like, but it may also be configured from any one of various types of information storage media, such as a magneto optical disk, a semiconductor memory, or the like.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes. They include roads for which traffic restriction information is not added, such as "one-way" and the like.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like. The guidance point data file 57 stores guidance data on geographical points where guidance is required, such as the content of a guidance display sign that is installed on a road, guidance for a branching point, and the like.

The destination data file 56 stores the destination data for use in the destination searches, such as data on major tourist areas, buildings, facilities, locations such as companies, sales offices, and the like that are listed in telephone directories and that can be selected as destinations, and the like.
The destination data includes search keys (phonetic representations of names) and information on facilities. The information on the facilities includes names, coordinates, telephone numbers, additional information, and the like. The coordinates are x and y coordinates that are derived from the latitudes and longitudes of the destinations. The additional information is detailed data that is related to the destinations.

The fuzzy data file 59 stores the fuzzy dictionary in which the characters that are input (the search keys) are associated with the destination data.
The fuzzy dictionary includes a plurality of the related terms and at least one generic name that is associated with each of the related terms. Each of the destination data items in the destination data file 56 is also associated with one of the generic names.

In the present embodiment, the fuzzy search extracts the related term that perfectly matches the characters that are input. The related term is stored as the search key that is also used for the ordinary search, as described later. Pointer data such as addresses and the like for the associated generic names are also stored with the search key that applies to the related term, such that the related term and the generic names are associated with one another.
However, the related term and the generic name data may also be stored in the fuzzy dictionary without the related term being used as the search key for the ordinary search. In this case, searching that is based on the characters that are input is performed using the search key for the ordinary search and the related term for the fuzzy search.

The related terms that are stored in the fuzzy dictionary include synonyms and the like for the destinations, including abbreviations, nicknames, aliases, and the like. Note that a thesaurus and a dictionary of similar terms may also be used, either separately or jointly.
In the fuzzy dictionary, for each of the generic names, pointer data items are stored for the addresses and the like of a plurality of the destination data items, such that the generic names and the destination data items are associated.
The generic names are names whose phonetic representations are partially the same as the phonetic representations of the plurality of the destination data items.

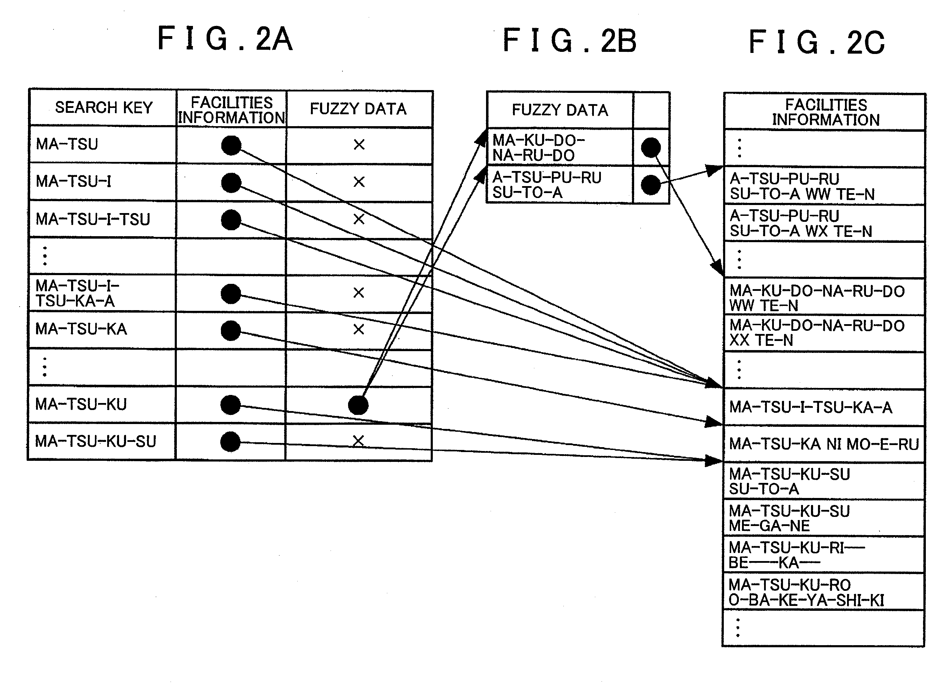

FIG. 2 is a figure that conceptually shows associations between the destination data items that are stored in the destination data file 56 and fuzzy data items that are stored in the fuzzy data file 59.
As shown in FIG. 2A, in the search keys that are input as characters, the phonetic representations of the names in the facilities information, and the phonetic representations of the related terms are arranged in the order of the Japanese syllabary.
The facilities information and address information (addresses in the destination data file and addresses in the fuzzy data file) for the fuzzy data (the generic names) are stored in association with each of the search keys and the related terms.
Note that in FIG. 2A, in order to make the relationships among the data items easier to understand, arrows that show the locations of the related data items are used instead of the address information.

The generic names in the fuzzy dictionary are stored in the fuzzy data that is shown in FIG. 2B. In addition to the examples shown in FIG. 2, the names of various convenience store chains, such as "Lo---tsu-n", "Se-bu-n i-re-bu-shi", "E---e-mu pie-n", "Fu-a-mi-ri--- ma---chi", and the like, may be stored in association with the related term (the search key) "Ko-n-bi-ni", for example.
Address information for the facilities information that is associated with each of the generic names is stored in fuzzy data. Note that, in this case, in order to make the relationships easier to understand, arrows that show the related locations are used instead of the address information.

The facilities information that is shown in FIG. 2C indicates only the names in the facilities information for each of the destination data items in the destination data file 56.
In the facilities information in FIG. 2C, the address of "ma-tsu-ku-su su-to-a" is shown as the facilities information that is associated with the search key (the related term) "ma-tsu-ku" shown in FIG. 2A. The destination data items that follow "ma-tsu-ku-su su-to-a" are shown as the destination candidates.
Note that the destination candidates may be narrowed down by including in the facilities information in FIG. 2A both the first address and the last address (the last address of the facilities information that contains all of the characters that were input) in the facilities information in FIG. 2C.

As shown in FIG. 2A, each of the search keys is associated with the facilities information items whose phonetic representations at least partially match the phonetic representation of the search key. In other words, the facilities information item "ma-tsu-i-tsu-ka-a" is associated with the search keys "ma-tsu", "ma-tsu-i", "ma-tsu-i-tsu", "ma-tsu-i-tsu-ka", and "ma-tsu-i-tsu-ka-a".
In contrast to this, the generic name is associated only with the search key that perfectly matches the related term. In other words, the generic name "ma-ku-do-na-ru-do" is associated only with the search key "ma-tsu-ku" that perfectly matches the related term "ma-tsu-ku".
Associating the generic name in this manner only with the search key that perfectly matches the related term, and extracting only the related term that perfectly matches the term that is input, prevents an enormous number of the generic names from being selected by the fuzzy search and prevents an enormous number of the destination data items from being selected based on the generic names.

The route guidance that is performed in the navigation device 1 thus configured is explained below.
The navigation device 1 uses the current position detection device 10 to detect the current position, then reads the map information for the area around the current position from the map data file 51 in the information storage device 50 and displays the map information on the display 42.
Once the destination is set by the destination input process, which is described later, the information processing control device 20 performs a plurality of searches (calculations) for candidates for routes from the current position to the destination, displaying the route candidates on the display 42. Once the driver selects one of the routes, the information processing control device 20 (as a route acquisition unit) acquires the selected route by storing it initiate the RAM 24.

Note that the information processing control device 20 may also transmit one of the current position of the vehicle and a departure point that has been input, along with the destination that is input according to the present embodiment, to an information processing center. The information processing control device 20 may then acquire the route to the destination by receiving a route for which a search has been performed at the information processing center. In this case, the communication of the destination and the route is accomplished by wireless communication through the communication interface 25.

When the vehicle is in motion, the route guidance is performed by tracking the current positions that are detected by the current position detection device 10.
The route guidance specifies the vehicle's position on the map by performing map matching between the road data that corresponds to the selected route and the current position that is detected by the current position detection device 10. A map of the area around the vehicle's current position is displayed on the display 42, and the selected route and the current position are displayed on the map.
Based on the relationship between the selected route and the current position, a determination is made as to whether or not guidance is necessary. For example, in a case where the vehicle continues moving straight ahead for more than a specified distance, a determination is made as to whether route guidance regarding a route change point or the like and heading guidance are necessary. If the guidance is necessary, the guidance is provided by a display on the display 42 and by audio.

Next, the destination input process according to the present embodiment will be explained.

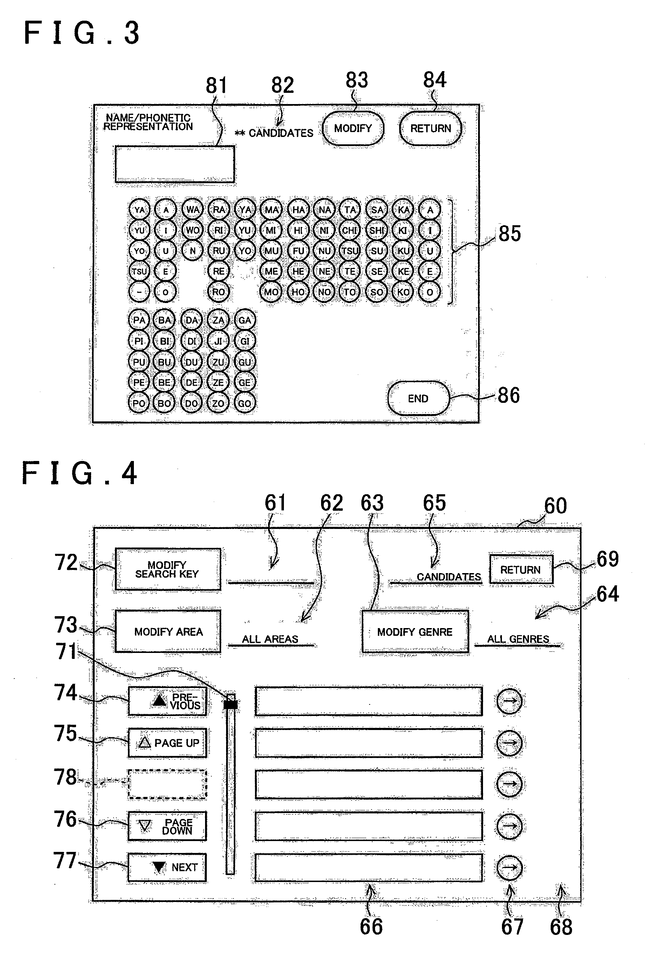

FIG. 3 shows the character input screen that is displayed on the display 42 during the destination input process.
As explained above, the touch panel that serves as the input device 41 (refer to FIG. 1) is provided on the face of the display 42. When the user touches a button that is displayed on the display 42, information that corresponds to the touched button is input to the navigation device 1.
A fixed frame of the input device 41 is provided around the outer edge of the display 42, although it is not shown in the drawings. A destination setting button and a map button are provided in the form of pushbuttons (hardware keys) that physically exist in an upper area of the fixed frame. The map button is used to display a map of the area around the current position.

When the destination setting button is selected, the information processing control device 20 starts the destination input process according to the present embodiment and displays the character input screen that is shown in FIG. 3 on the display 42.
Note that the destination that is set by the destination input process according to the present embodiment is used for the route search and is also used when the selected destination and the candidate destinations in the vicinity of the current position are displayed on the map screen.

As shown in FIG. 3, the character input screen includes a character input space 81, a number of candidates space 82, a Modify button 83, a Return button 84, an input keyboard 85, and an End button 86.

The character input space 81 is a space that displays characters that are input as a search key in the order in which they are input.
The keyboard 85 includes character buttons for inputting the characters of the Japanese syllabary. A numeric keypad and a function key may also be displayed.

The number of candidates space 82 displays the number of candidate locations (the destination data items) that are found by the ordinary search and the fuzzy search that use the characters that are displayed in the character input space 81 as the search key.
The Modify button 83 is used to change the characters that are displayed in the character input space 81 after the input is complete.
The Modify button 83 is a button that is used to change the characters that are input.

The Return button 84 is a button for returning to the state prior to the last operation.
The End button 86 is a button for indicating the end of the input of the search key. When the End button 86 is selected, the display on the display 42 changes to the candidate display screen 60, which is shown in FIG. 4.

When the user performs the character input on the character input screen by touching in order the characters on the input keyboard 85 that correspond to the intended search key, the information processing control device 20 displays the characters that have been input in order in the character input space 81.
The information processing control device 20, using the characters that have been input as the search key, takes the destination data items that have been found by the ordinary search, the related term that has been extracted by the fuzzy search, and the generic names and the destination data items that are associated with the related term and stores them in the RAM 24.

For example, if the character "ma" is input from the input keyboard 85, the information processing control device 20 displays the character "ma" that was input in the character input space 81.
The information processing control device 20 then performs an ordinary search of the destination data file 56, using "ma" as the search key. From the address information in the corresponding facilities information items, the information processing control device 20 selects, as the destination candidates, the data starting with the facilities information item "ma-tsu-i-tsu-ka-a". The information processing control device 20 stores the data in the RAM 24.
At this point in time, a related term that perfectly matches the search key "ma" is not registered in the fuzzy dictionary, and no address information exists in a fuzzy data space that corresponds to the search key "ma". Therefore, the number of related terms that are extracted by the fuzzy search, the number of the generic names that correspond to the related terms, and number of the destination data items that correspond to the grnc names are all zero.

If the character "tsu" is then input from the input keyboard 85, the information processing control device 20 changes the display in the character input space 81 from "ma" to "ma-tsu", the characters that have been input.
However, for both the ordinary search and the fuzzy search, the address information that corresponds to "ma-tsu" is the same as the address information that corresponds to "ma", so the search results are the same.

If the character "ku" is then input from the input keyboard 85, the information processing control device 20 changes the display in the character input space 81 to "ma-tsu-ku".
The information processing control device 20 then performs an ordinary search of the destination data file 56, using "ma-tsu-ku" as the search key (refer to FIG. 2A). From the address information in the corresponding facilities information items, the information processing control device 20 selects, as the destination candidates, the data starting with the facilities information item "ma-tsu-ku-su su-to-a". The information processing control device 20 stores the data in the RAM 24.

As shown in FIG. 2B, the generic names "ma-ku-do-na-ru-do" (registered trademark) and "a-tsu-pu-ru su-to-a" (registered trademark) that are associated with the related term that perfectly matches the search key "ma-tsu-ku" are registered in the fuzzy dictionary. Accordingly, based on the address information in the fuzzy data items that are associated with the related term that perfectly matches the search key "ma-tsu-ku", the information processing control device 20 selects the generic names "ma-ku-do-na-ru-do" and "a-tsu-pu-ru su-to-a" from the fuzzy data file 59 and stores them in the RAM 24.
Furthermore, as shown in FIG. 2B, based on the address information that corresponds to the selected generic names, the information processing control device 20 selects as the destination candidates, from the destination data file 56, the destination data items starting with "ma-ku-do-na-ru-do WW te-n" and the destination data items starting with "a-tsu-pu-ru su-to-a WW te-n". The information processing control device 20 then stores the selected destination data items in association with the respective generic names.

Thereafter, if the user touches the End button 86 on the character input screen, the information processing control device 20 switches the display screen of the display 42 to the candidate display screen 60 and displays the destination candidates in list form.

FIG. 4 shows the candidate display screen 60.
As shown in FIG. 4, a search key space 61, an area input space 62, a Modify Genre button 63, a genre input space 64, a total number of candidates space 65, search results display spaces 66, detail display buttons 67, a number of fuzzy search candidates space 68, a Return button 69, a scroll bar 71, a Modify Search Key button 72, a Modify Area button 73, a Previous button 74, a Page Up button 75, a Page Down button 76, a Next button 77, and the search switch button 78 are displayed on the candidate display screen 60.

The search key space 61 is a space that displays the search key for which the search is performed. The characters that were input in the character input space 81 at the point in time when the End button 86 was selected on the character input screen shown in FIG. 3, that is, the characters that were displayed in the character input space 81, are displayed as the search key.
The Modify Search Key button 72 is a button that is touched in order to modify the characters that are displayed in the search key space 61. When the Modify Search Key button 72 is touched, the display returns to the character input screen, and it becomes possible to modify the characters that are displayed in the search key space 61.

The area input space 62 is a space for setting a search area within which the search for the destination data will be performed. For example, the area may be set to "All areas" to define the entire country as the search area, and the area may also be set to a smaller area, such as "Osaka Prefecture", Aichi Prefecture", "Metropolitan Tokyo", or the like.
A search area setting menu is provided as a part of the destination input process, although it is not shown in the drawings. The user can therefore select the desired search area.
The navigation device 1 uses the destination data for the area that is set in the area input space 62 and narrows down the destination candidates in the area according to the search key.
The Modify Area button 73 is a button that is touched in order to modify the search area that is set in the area input space 62. When the Modify Area button 73 is touched, it becomes possible to modify the search area that is set in the area input space 62. After the search area is modified, a search of the modified area is performed using the search key that is displayed in the search key space 61.

The genre input space 64 is a space for setting a genre within which the search for the destination data will be performed. For example, the genre may be set to "leisure", "restaurants", "hotels", or the like.
A genre setting menu is provided as a part of the destination input process, although it is not shown in the drawings. The user can therefore select the desired genre.
The navigation device 1 uses the destination data for the genre that is set in the genre input space 64 and narrows down the destination candidates in the genre according to the search key.
The Modify Genre button 63 is a button that is touched in order to modify the genre that is set in the genre input space 64. When the Modify Genre button 63 is touched, it becomes possible to modify the genre that is set in the genre input space 64. After the genre is modified, a search of the modified genre is performed using the search key that is displayed in the search key space 61.
By using the search area and the genre as described above to narrow down the destination data that is the object of the search, the navigation device 1 reduces the amount of the search processing.

The total number of candidates space 65 displays the total number of the destination candidates that have been selected. The total number of the destination candidates is the sum of the number of the destination candidates that were selected by the ordinary search and the number of the destination candidates that were selected by the fuzzy search. Note that the numbers of the destination candidates that were selected by each of the searches may also be displayed separately.

The search results display spaces 66 are spaces for displaying the names of the selected destination candidates in list form.
The destination candidates that were selected by the ordinary search and the generic names that were selected by the fuzzy search are displayed in the search results display spaces 66. If one of the displayed generic names is selected, the destination candidates that are associated with the selected generic name are displayed in the search results display spaces 66.
If one of the destination candidates that are displayed in the search results display spaces 66 is selected (touched), the destination data item for the selected destination candidate is established as the destination that is input.

One of the detail display buttons 67 is displayed for each of the destination candidates. When the user touches the detail display button 67 for the desired destination candidate, the navigation device 1 searches the destination data file 56 for the facilities information that is associated with the selected destination candidate and displays the facilities information on the display 42.
In a case where the generic names that are selected by the fuzzy search are displayed in the search results display spaces 66, the number of fuzzy search candidates space 68 displays the number of the destination candidates that were selected for each of the generic names.
The Return button 69 is a button for returning to the character input screen.

The Previous button 74 and the Next button 77 are buttons for respectively scrolling up and scrolling down within the search results display spaces 66, one destination candidate at a time.
The Page Up button 75 and the Page Down button 76 are buttons for respectively scrolling up and scrolling down within the search results display spaces 66, one page at a time.

The scroll bar 71 indicates the position of the currently displayed destination candidates among all of the destination candidates. Scrolling up and scrolling down can be done by touching and dragging the scroll bar 71.

The search switch button 78 is a button for switching the display in the search results display spaces 66 between a display that positions the generic names selected by the fuzzy search at the top and a display that positions the destination candidates selected by the ordinary search at the top.
In the present embodiment, in a case where the generic names are selected by the fuzzy search, the generic names are displayed in a specified order in the search results display spaces 66, followed by the destination candidates selected by the ordinary search, also displayed in a specified order. If the search switch button 78 is touched when the display is in this state, the destination candidates selected by the ordinary search are moved to the top of the displayed list. If the search switch button 78 is then touched again, the generic names selected by the fuzzy search are moved back to the top of the displayed list.

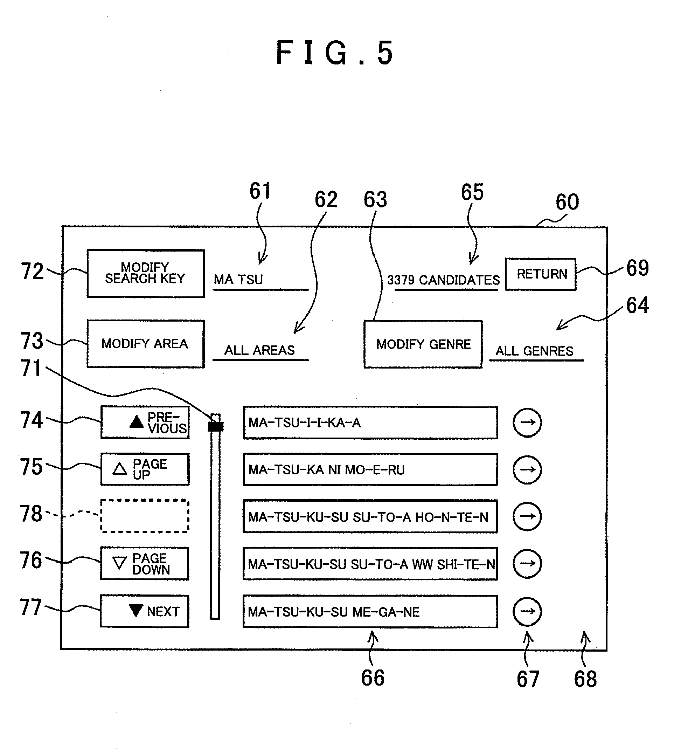

FIGS. 5 to 7 show states of displays on the candidate display screen 60 that are based on ordinary searches and fuzzy searches that are performed based on characters that have been input on the character input screen.
FIG. 5 shows a state of display on the candidate display screen 60 after the two-character string "ma-tsu" has been input on the character input screen and the End button 86 has been touched.

As shown in FIG. 5, the information processing control device 20 displays the chosen search key "ma-tsu" in the search key space 61.
The information processing control device 20 also reads, from the RAM 24, the destination candidates that were selected by the ordinary search and the fuzzy search when "tsu" was input on the character input screen and were stored in the RAM 24.
The total number of 3379 candidates is displayed in the total number of candidates space 65.

The information processing control device 20 displays the names of the destination candidates it has read in a specified order in the search results display spaces 66. (In the present embodiment, the names are displayed in the order of the Japanese syllabary, but they may also be displayed in order by their proximity to the current position.)
As explained above, when the candidate display screen 60 is first displayed after the switch from the character input screen, the generic names selected by the fuzzy search and the destination candidates selected by the ordinary search are displayed in list form in the search results display spaces 66.
However, the related term that perfectly matches the search key "ma-tsu" does not exist in the fuzzy dictionary, so the examples of the fuzzy data shown in FIG. 2B do not include any fuzzy data that is associated with the related term.

Accordingly, in the example shown in FIG. 5, no generic name that is associated with the related term is displayed, and the number of fuzzy search candidates space 68 is completely blank. The total number of 3379 candidates that is displayed in the total number of candidates space 65 thus represents the number of the destination candidates that were selected by the ordinary search.
Note that because there are no generic names to be displayed in list form in the search results display spaces 66, the search switch button 78 is not displayed.

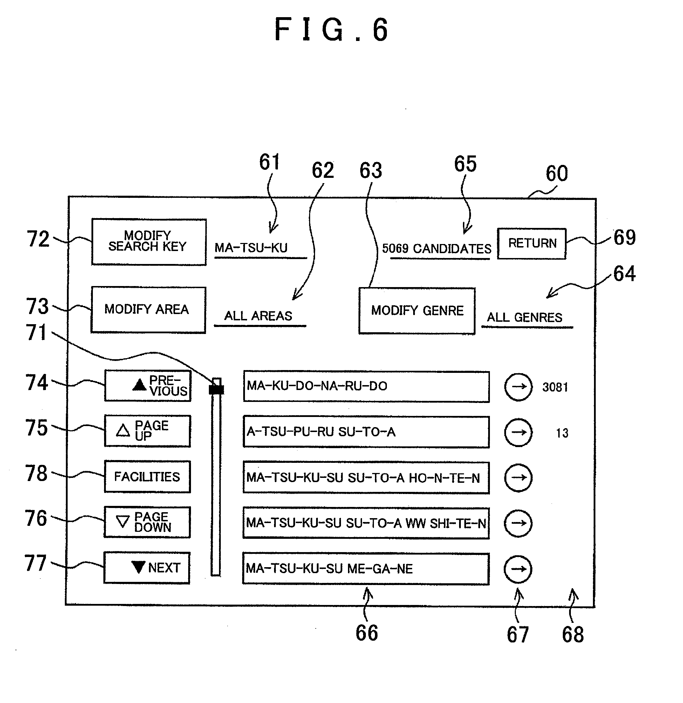

FIG. 6 shows a state of display on the candidate display screen 60 after the three-character string "ma-tsu-ku" has been input on the character input screen and the End button 86 has been touched.
When the character "ku" is input on the character input screen, the information processing control device 20 performs the ordinary search, using the characters "ma-tsu-ku" that were input as the search key, and stores the selected destination candidates in the RAM 24.
The information processing control device 20 also extracts from the fuzzy dictionary the related term that perfectly matches the search key "ma-tsu-ku" and selects the associated generic names "ma-ku-do-na-ru-do" and "a-tsu-pu-ru su-to-a". The information processing control device 20 stores the generic names in the RAM 24, along with the destination candidates that are selected from the address information that is associated with each of the generic names (refer to FIG. 2).

Accordingly, when the End button 86 on the character input screen is touched, the information processing control device 20 displays the search key "ma-tsu-ku" in the search key space 61, as shown in FIG. 6. The information processing control device 20 also displays the generic names selected by the fuzzy search and the destination candidates selected by the ordinary search in list form, starting from the uppermost space in the search results display spaces 66.
In the example in FIG. 6, the generic names "ma-ku-do-na-ru-do" and "a-tsu-pu-ru su-to-a" are displayed starting from the uppermost space in the search results display spaces 66, and the number of the selected destination candidates that are associated with each of the generic names is displayed in the number of fuzzy search candidates space 68. This makes it possible for the user to recognize that 3081 destination candidates exist that are associated with the generic name "ma-ku-do-na-ru-do", such as "ma-ku-do-na-ru-do WW te-n", "ma-ku-do-na-ru-do XX te-n", and the like. The user can also recognize that 13 destination candidates exist that are associated with the generic name "a-tsu-pu-ru su-to-a", such as "a-tsu-pu-ru su-to-a WW te-n", "a-tsu-pu-ru su-to-a XX te-n", and the like.

When the user touches (selects) either of the displayed generic names, the information processing control device 20 reads from the RAM 24 the selected destination candidates that are associated with the selected generic name and displays them in a specified order in list form in the search results display spaces 66.
Note that in this case, in the present embodiment, the search key space 61 displays the characters "ma-tsu-ku" (the related term) as they were input, but the selected generic name ("ma-ku-do-na-ru-do", for example) may be displayed in the search key space 61 instead. In a case where the generic name is displayed in the search key space 61, the total number of the selected destination candidates that are associated with the generic name may also be displayed in the total number of candidates space 65.

If the Return button 69 is touched while the destination candidates that are associated with the generic name are being displayed, the information processing control device 20 returns the display to the immediately preceding state (the state shown in FIG. 6).

Note that if one of the detail display buttons 67 that correspond to the generic names is selected while the display is in the state shown in FIG. 6, the destination candidates are displayed in list form based on the generic name, in the same manner as when the generic name is selected, but the detail display buttons 67 that correspond to the generic names may also not be displayed (and may also be displayed in a non-active state).

In the example in FIG. 6, the generic names "ma-ku-do-na-ru-do" and "a-tsu-pu-ru su-to-a" that were selected by the fuzzy search are displayed, followed by the destination candidates "ma-tsu-ku-su su-to-a ho-n-te-n", "ma-tsu-ku-su su-to-a WW shi-te-n", and "ma-tsu-ku-su me-ga-ne" that were selected by the ordinary search.
In a case where there are destination candidates to be displayed that follow "ma-tsu-ku-su me-ga-ne", touching the Next button 77 scrolls the display down one candidate at a time, and touching the Page Down button 76 scrolls the display down one page at a time. (In the present embodiment the search results display spaces 66 can display five candidates at a time.)
Further, touching the scroll bar 71 and dragging it downward scrolls the display down in accordance with the amount of the downward dragging.

As shown in FIG. 6, the related term that perfectly matches the search key "ma-tsu-ku" is extracted, and the generic names that are associated with the related term are displayed starting from the uppermost space in the search results display spaces 66. In some cases, all of the items displayed in list form in the search results display spaces 66 will be the generic names. The information processing control device 20 therefore provides (displays) the search switch button 78 such that when the user touches the search switch button 78, the destination candidates that were selected by the ordinary search will be displayed starting from the uppermost space in the search results display spaces 66.
The search switch button 78 displays the word "Facilities" to indicate that the destination candidates that were selected by the ordinary search will be displayed if the search switch button 78 is touched.

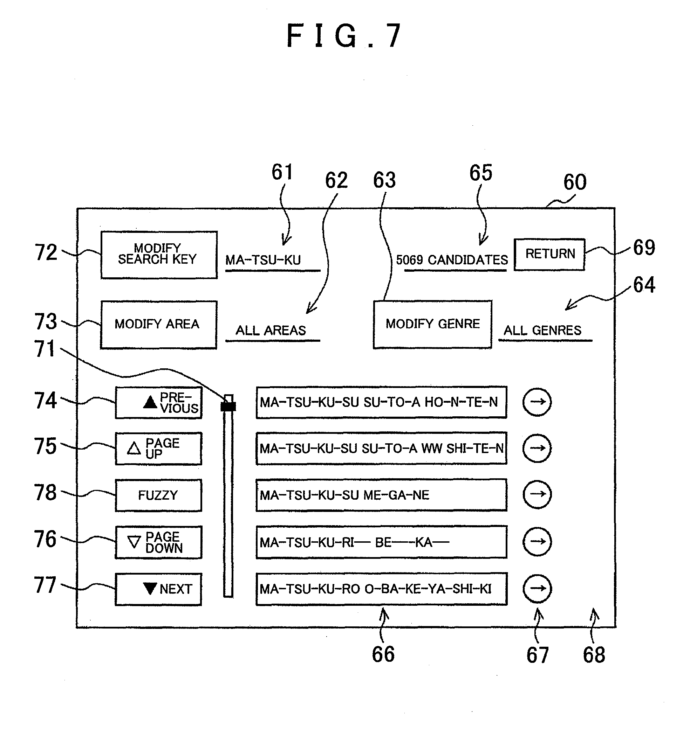

FIG. 7 shows a screen that is displayed when the search switch button 78 is touched on the candidate display screen 60 in FIG. 6.
As shown in FIG. 7, if the search switch button 78 is touched while it displays the word "Facilities", the information processing control device 20 displays in list form the destination candidates that were selected by the ordinary search, starting from the uppermost space in the search results display spaces 66 (in the order of the Japanese syllabary).
In FIG. 6, the first of the destination candidates is "ma-tsu-ku-su su-to-a ho-n-ten", so when the search switch button 78 is touched, "ma-tsu-ku-su su-to-a ho-n-te-n" is moved to the uppermost space in the search results display spaces 66 and is followed by "ma-tsu-ku-su su-to-a WW shi-te-n", "ma-tsu-ku-su me-ga-ne", "ma-tsu-ku-ri-i be-e-ka-a", and "ma-tsu-ku-ro o-ba-ke-ya-shi-ki". The destination candidates that follow "ma-tsu-ku-ro o-ba-ke-ya-shi-ki" can be displayed by operating at least one of the Page Down button 76 and the Next button 77 to scroll down the display.

In a case where the information processing control device 20 shifts to displaying the destination candidates that were selected by the ordinary search, starting from the uppermost space in the search results display spaces 66, the display in the search switch button 78 changes from the word "Facilities" to the word "Fuzzy" (refer to FIG. 7).
If the user touches the search switch button 78 while it displays the word "Fuzzy", the information processing control device 20 returns to the state shown in FIG. 6, displaying the generic names that were selected by the fuzzy search in order in the search results display spaces 66.

Note that the changing of the word that the search switch button 78 displays is not limited to the case where the search switch button 78 is touched while it displays the word "Facilities". If the display in the search results display spaces 66 is scrolled such that the generic names that were displayed are no longer displayed, the word that the search switch button 78 displays may change to "Fuzzy". In other words, the word that the search switch button 78 displays may change according to whether or not the generic names are displayed.
The search switch button 78 may also display "Facilities/Fuzzy" instead of alternating between the two words.

As explained above, the present embodiment operates as described below.
The ordinary search and the fuzzy search are performed using the characters that are input as the search key. The fuzzy search uses the fuzzy dictionary, in which the related terms (ma-tsu-ku, ko-n-bi-ni, and the like), the generic names, and the destination data items are associated with one another. The fuzzy search extracts the related term that perfectly matches the characters that are input, then selects the generic names that are associated with the extracted related term and the destination data items that are associated with the generic names.
The search results, the generic names selected by the fuzzy search based on the extracted related term and the destination candidates selected by the ordinary search, are both displayed in list form.
The search switch station 78 is provided to switch the list of the search results between a display that lists the generic names first and a display that lists destination candidates selected by the ordinary search at the top.
Operating in this manner makes it possible for the present embodiment to achieve the effects described below.

(1) In the fuzzy search, the related term that perfectly matches the search key is extracted, and the destination candidates that are associated with the related term are selected. This prevents the fuzzy search from producing an enormous number of the destination candidates, which would make the desired destination candidate harder to find.
(2) Furthermore, the generic names that are associated with the extracted related term, not the destination candidates that are selected by the fuzzy search, are displayed in the search results display spaces 66 along with the destination candidates that are selected by the ordinary search. This makes it possible to reduce the number of unnecessary items that are displayed in the list for the user who does not need the fuzzy search.
   On the other hand, for the user who wants to use the fuzzy search, it becomes easier to search for the desired destination candidates based on the related term and the generic names.
(3) The search switch button 78 makes it possible to switch to the display that lists the destination candidates selected by the ordinary search, starting from the top, and to switch to the display that lists the generic names selected by the fuzzy search, starting from the top. This makes it possible for the user who does not need the fuzzy search to display the results of the ordinary search right away in list form.
   In the example in FIG. 6, only two of the generic names are displayed, but particularly in a case where more of the generic names are selected than the number of items that can be displayed in the search results display spaces 66 (five items in the present embodiment), the search switch button 78 makes it easy for the user to display the list of the destination candidates that were selected by the ordinary search without having to scroll past the generic names.

Note that the present embodiment may be configured as described below.
(1) Configuration A
   The destination input device includes a destination data storage unit, a fuzzy dictionary storage unit, a character input unit, an ordinary search unit, a fuzzy search unit, and a search results display unit. The destination data storage unit stores the plurality of the destination data items that are associated with the search key. The fuzzy dictionary storage unit stores the related terms that are related to the destination data items, plus a plurality of the destination data items that are associated with each of the related terms. The character input unit inputs characters. The ordinary search unit uses the characters that are input as the search key to select at least one of the destination data items that are stored in the destination data storage unit. The fuzzy search unit extracts the related term that perfectly matches the characters that are input, and also selects the destination data items that are associated with the extracted related term.
   The search results display unit displays in list form the search results that are produced by the ordinary search unit and the fuzzy search unit.
(2) Configuration B
   The destination input device is configured as in Configuration A. The fuzzy dictionary storage unit also stores a plurality of generic names that are associated with each of the related terms, each of the generic names naming and being associated with a plurality of the destination data items. The search results display unit also displays in list form, as the search results, the generic names that are associated with the related term that was extracted by the fuzzy search unit.
(3) Configuration C
   The destination input program is provided for a computer that includes a destination data storage unit that stores the plurality of the destination data items that are associated with the search key and a fuzzy dictionary storage unit that stores the related terms that are related to the destination data items, plus a plurality of the destination data items that are associated with each of the related terms. The destination input program causes the computer to function as a character input unit, an ordinary search unit, a fuzzy search unit, and a search results display unit. The character input unit inputs characters. The ordinary search unit uses the characters that are input as the search key to select at least one of the destination data items that are stored in the destination data storage unit. The fuzzy search unit extracts the related term that perfectly matches the characters that are input, and also selects the destination data items that are associated with the extracted related term. The search results display unit displays in list form the search results that are produced by the ordinary search unit and the fuzzy search unit.
   As described above, a destination input device performs an ordinary search and a fuzzy search. The fuzzy search uses a fuzzy dictionary containing related terms that relate to destination data items, plus generic names that are associated with the related terms and that name and are associated with the destination data items. The fuzzy search extracts the related term that perfectly matches characters that are input, selects the generic names based on the related term and selects destination candidates based on the generic names. By extracting the related term, the fuzzy search reduces the volume of search results. The number of results displayed by the fuzzy search is reduced by displaying the selected generic names along with the destination candidates selected by the ordinary search. A search switch button is provided for switching between a results display that lists the generic names first and a results display that lists the destination candidates first.
   In the following, the original Japanese characters used in the drawings and in the above description are shown.

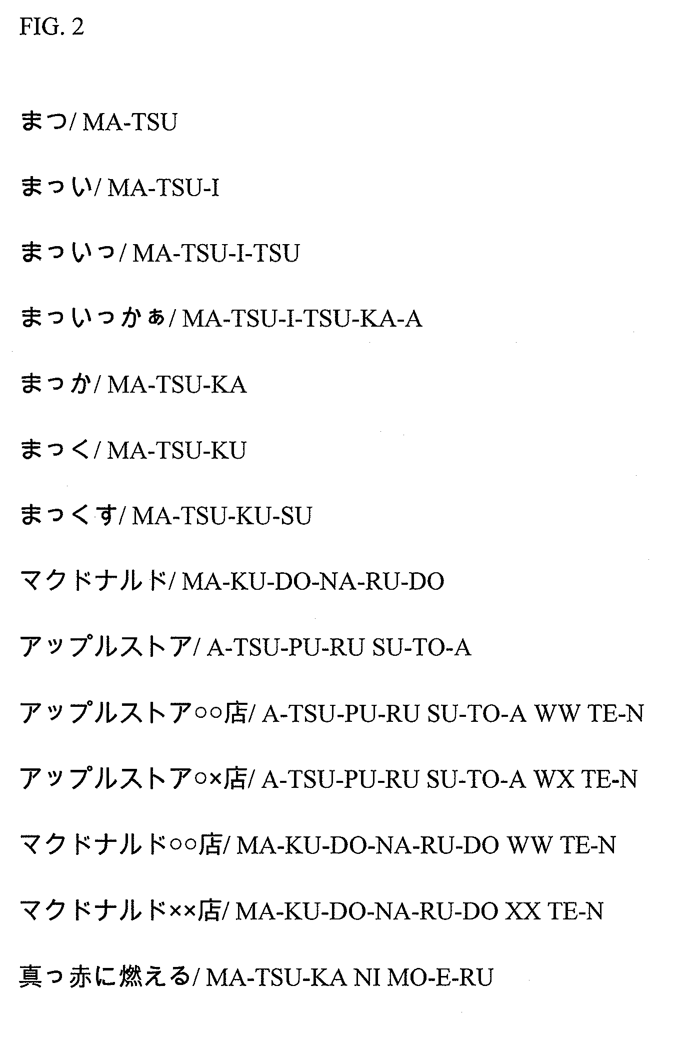

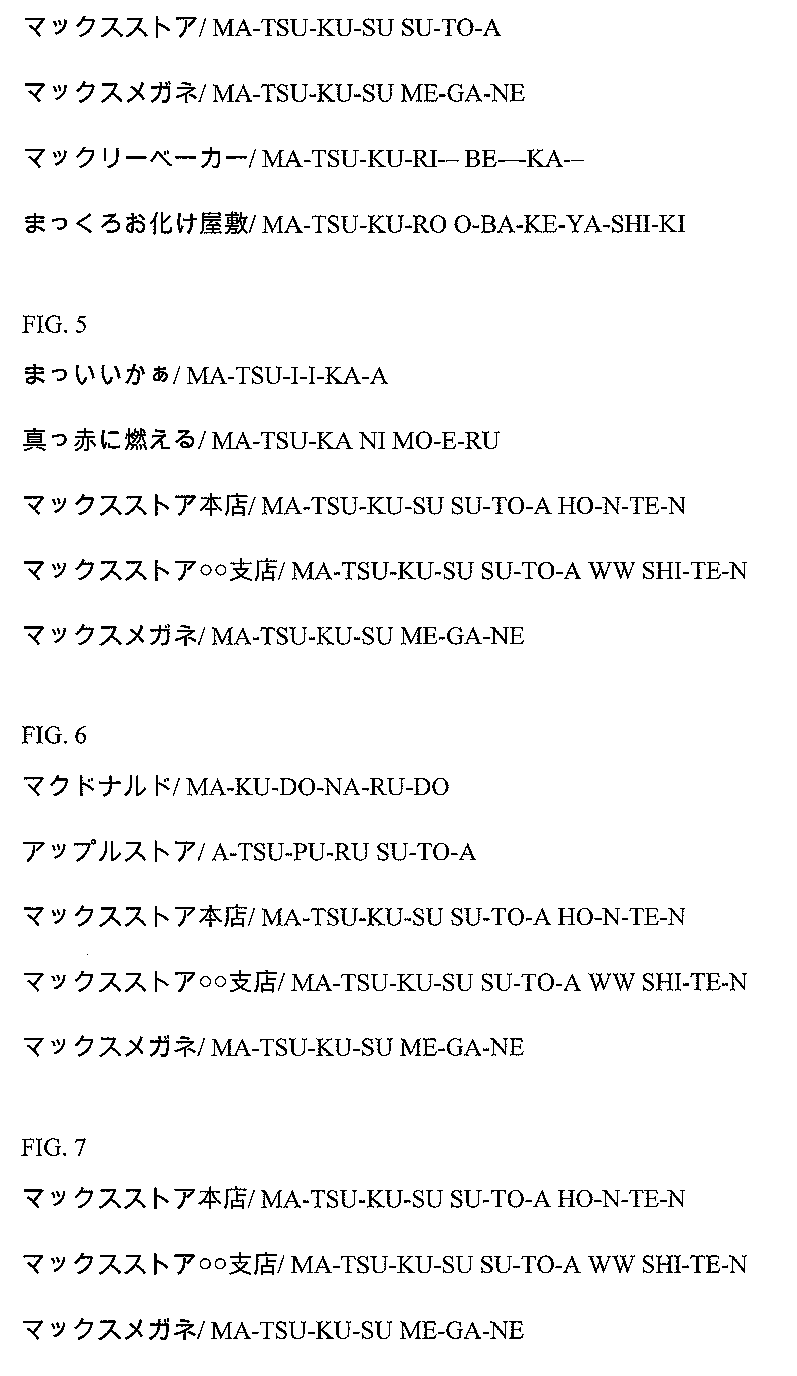

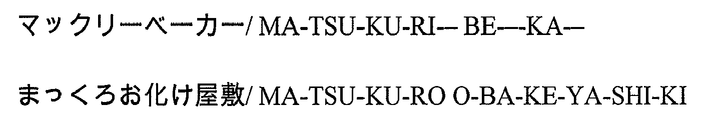

## Claims

1. A destination input device (1), comprising:
a destination data storage unit (56) that stores a plurality of destination data items that are associated with a search key;
a fuzzy dictionary storage unit (59) that stores a fuzzy dictionary in which are stored a plurality of related terms that are related to the destination data items, plus a plurality of generic names that are associated with each of the related terms, each of the generic names naming and being associated with a plurality of the destination data items;
a character input unit (41) that inputs a character;
an ordinary search unit that uses the character that is input as the search key to select at least one of the destination data items that are stored in the destination data storage unit (56);
a fuzzy search unit that uses the character that is input as the search key to extract one of the related terms, the generic names that are associated with the extracted related term and the destination data items that are associated with the generic names; and
a search results display unit (42) that displays in list form, as search results that correspond to the character that is input, the generic names that are selected by the fuzzy search unit and the at least one of the destination data items that is selected by the ordinary search unit.

2. The destination input device (1) according to claim 1, wherein
the search results display unit (42), when one of the displayed generic names is selected, displays in list form the destination data items that are associated with the selected generic name.

3. The destination input device (2) according to either claim 1 or 2, further comprising:
a search switch button (78),
wherein
the search results display unit (42), when the search switch button (78) is selected, displays in list form, starting at the top, the at least one of the destination data items that is selected by the ordinary search unit.

4. A destination input method for a computer that includes a destination data storage unit (56) that stores a plurality of destination data items that are associated with a search key and a fuzzy dictionary storage unit (59) that stores a fuzzy dictionary in which are stored a plurality of related terms that are related to the destination data items, plus a plurality of generic names that are associated with each of the related terms, each of the generic names naming and being associated with a plurality of the destination data items, the destination input method comprising the steps of:
inputting a character by a character input unit (41) ;
using the input character by an ordinary search unit as the search key to select at least one of the destination data items that are stored in the destination data storage unit;
using the input character by a fuzzy search unit that as the search key to extract one of the related terms, the generic names that are associated with the extracted related term, and the destination data items that are associated with the generic names; and
displaying by a search results display unit (42) in list form, as search results that correspond to the character that is input, the generic names that are selected by the fuzzy search unit and the at least one of the destination data items that is selected by the ordinary search unit.

5. A computer program product including a program for a processing device, comprising software code portions for performing the steps of claim 4 when the program is run on the processing device.

6. The computer program product according to claim 5, wherein the computer program product comprises a computer-readable medium on which the software code portions are stored, wherein the program is directly loadable into an internal memory of the processing device.
